# EUROPEAN PATENT APPLICATION

(11) **EP 1 897 700 A2**
(43) Date of publication of application: **12.03.2008**
(21) Application number: 07115618.6
(22) Date of filing: 04.09.2007
(51) Int. Cl.: B44F 1/12, B29C 39/14, B44C 1/17, B42D 15/00, B44F 7/00

(54) **Method of manufacturing a security device**

(30) Priority: 08.09.2006 GB 0617729; 02.11.2006 GB 0621865
(71) Applicant: De La Rue International Limited, Basingstoke, Hampshire RG22 4BS (GB)
(72) Inventor: Commander, Lawrence George, Reading, Berkshire RG31 6RR (GB)
(74) Representative: Skone James, Robert Edmund

(57) **Abstract**

A method of manufacturing a security device comprises:
a) providing a transparent, plastics support layer (10) releasably on a carrier layer(12);
b) coating the plastics support layer (10) with a radiation curable material (18), wherein either
i) the radiation curable material inherently provides an optically variable effect or
ii) the method further comprises providing the radiation curable material with an optically variable effect generating structure,

c) curing the radiation curable material (18) by exposure to suitable curing radiation; and,
d) cutting through the cured material and the support layer (10) along a boundary (24) defining the security device.

## Description

The invention relates to a method of manufacturing a security device, in particular incorporating an optically variable effect structure.

Optically variable effect structures such as holograms and diffraction gratings have been used widely over the last few years to impart security to documents of value such as banknotes, credit cards and the like. Conventionally, the structure is provided on a transfer foil and is then hot stamped from the transfer foil onto the final substrate. An early example of this approach is described in US-A-4728377.

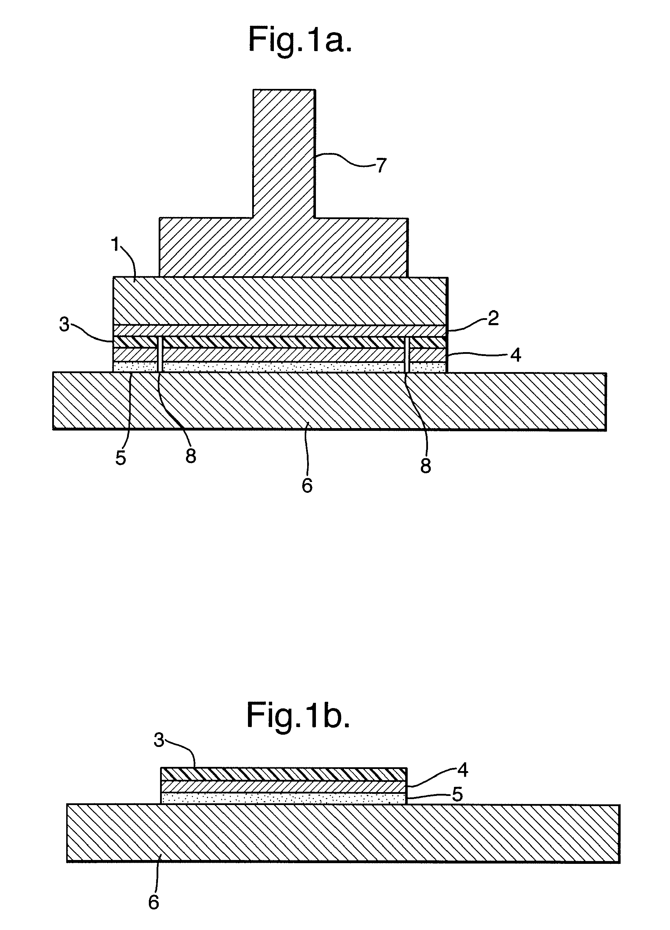

Hot stamp transfer techniques have worked well and are particularly suited to the application of thin, fragile embossed material to a suitable substrate. Figure 1a illustrates a typical structure of a transfer foil as known from the prior art. The structure comprises a carrier layer or film 1 with a release layer 2 on to which is applied a thin thermoplastic resin 3. The optically variable effect structure, for example a hologram, is embossed into the thermoplastic resin 3. A thin image enhancing layer 4, for example vapour deposited aluminium, is then applied to the embossed structure. An adhesive layer 5 is then applied to the foil and it is pressed against a substrate 6, for example a document of value such as a banknote, to which it is to be adhered using a suitable pressure plate 7. The application of heat and pressure causes adhesion of the foil to the substrate in the regions in alignment with the pressure plate. On removing the carrier film 1 from the thermoplastic layer 3 the remaining foil structure (thermoplastic layer 3, image enhancing layer 4 and adhesive layer 5) fractures along the edges 8 aligned with the pressure plate 7 such that only the areas that were in contact with the pressure plate remain on the substrate, as illustrated in Figure 1b.

The creation of an optically variable structure by hot embossing into a thermoplastic resin has its limitations. The use of thermoplastic materials means that in order to faithfully replicate the master structure the heat and pressure must be carefully controlled, and the thermal stability of the structure must be considered in post-production handling. Ultimately a hot embossing process cannot give 100% replication of the master structure. In order to achieve high resolution replication it is preferable to employ a technique in which the separation of the master structure from the replicated structure takes place after the hardening of the polymeric resin.

More recently, therefore, techniques such as in-situ polymerisation replication (ISPR) have been developed in which a polymer is cast or moulded against a holographic or other optically variable effect profile continuously while the polymer is held on a substrate, the profile then being retained by curing on or after removal from the profiled mould. One example of this type of technique is UV casting. In a typical UV casting process a flexible polymeric film is unwound from a reel, where a UV curable polymer resin is then coated onto the polymeric film. If required, a drying stage then takes place to remove solvent from the resin. The polymeric film is then held in intimate contact with the production tool in the form of an embossing cylinder, whereby the optically variable structure defined on the production tool is replicated in the resin held on the polymeric film. UV light is used at the point of contact to cure and harden the resin, and as a final stage, the film supporting the cast and cured resin is rewound onto a reel. Examples of this approach are described in U.S. Pat. Nos. 3689346, 4758296, 4840757, 4933120, 5003915, 5085514 and DE-A-4,132,476.

The major advantage of UV casting over hot embossing is the improved fidelity of the replicated structure and improved thermal stability due to the use of non-thermoplastic materials. The UV casting process is suitable for sub-micron replication for example holograms, and for high fidelity replication of non-holographic micro-optical structures where the depth of the structure is typically in the range 1-50µm. Example micro-optical structures include arrays of microlenses and arrays of microprisms. One advantage of using micro-optical components in security devices is that mechanical copying of micro-optical components, such as spherical or cylindrical microlenses or an array of parallel linear prisms, typically with a size range of 1-50µm, is very difficult to achieve because any variation in dimension or geometrical distortion leads to a decline or extinction of the required optical properties.

Although UV casting offers improved fidelity of replication, hot embossing still remains the preferred technique for producing optically variable devices for subsequent transfer to a secure document. The main reason for this is that the materials used for the UV casting process have properties which are not compatible with a hot stamping transfer process, and therefore it is not straightforward to transfer a discrete patch of a UV cast optically variable structure to a secure document. Polymeric resins suitable for the UV casting process are inherently strong and do not tend to fracture very easily during the hot stamping process. This problem is compounded for non-holographic micro-optical structures where the increased thickness of the layer of UV polymer makes it very difficult to fracture the device during the hot-stamping process.

US4758296 describes the production of a holographic foil, generated by UV casting, which can be transferred to a substrate as a patch using the hot stamping process. In order to facilitate the hot stamping process a UV curable polymer is selected which is brittle enabling it to fracture at the edges of the region contacted by the stamping die. This solution is not ideal for applications concerning flexible documents as the use of a brittle material will reduce the durability of the final device especially if, as is the case with a banknote, the document is repeatedly folded or crumpled during circulation. The use of a brittle material also becomes more problematic the thicker the device becomes, making the prior art solution even less suitable for the replication of the non-holographic micro-optical devices.

In accordance with the present invention, a method of manufacturing a security device comprises
i) providing a transparent, plastics support layer releasably on a carrier layer;
ii) coating the plastics support layer with a radiation curable material, wherein either
   a) the radiation curable material inherently provides an optically variable effect or
   b) the method further comprises providing the radiation curable material with an optically variable effect generating structure,
iii) curing the radiation curable material by exposure to suitable curing radiation; and,
iv) cutting through the cured material and the support layer along a boundary defining the security device.

The present invention provides an improvement over the prior art because the mechanical properties of the radiation curable material, such as a resin, no longer have to be selected to facilitate the transfer of the device using the hot stamping process, and therefore the durability of the device does not have to be compromised by deliberately selecting a brittle material.

The use of the support layer and the carrier layer, typically two polymeric films, in the pre-transfer structure enables the support layer to be transferred with the layer of radiation curable material onto a document and therefore there is no requirement to release the radiation curable material comprising the cast microstructure from the support layer as is the case with the prior art. This prior art approach is problematic because when the microstructure is originally cast it is required to strongly adhere to the first polymeric film and release from the master, which is in conflict with the subsequent requirement of an easy release from the first polymeric film when ultimately transferred to the document. US4758296 suggests casting a polymeric resin onto a release layer but this can lead to difficulties in releasing the resin from the master structure.

Cutting, typically die-cutting or laser cutting, the security device prior to transfer to the base substrate enables the cast radiation curable material to be successfully fractured at the boundaries of the area to be transferred removing the requirement of fracturing the layers during the transfer process.

One advantage of this process is that the carrier (film) which is ultimately discarded can be used to support a thinner polymeric support layer film during the casting process. Typically a UV casting replication process for micro-optical structures with a depth greater than 10µm requires a minimum film thickness of 25 µm for the film onto which the structure is cast to enable efficient handling. If this film, which is then combined with additional layers, is applied to the surface of a secure document, problems may occur due to the thickness of the device. A thick surface device is not ideally suitable for documents which have to be sorted and distributed using automated cash handling equipment. The use of a thin polymeric film or other support layer, preferably less than 10µm and even more preferably less than 5µm, reduces the thickness of the final security device and improves the efficiency of the final document through the automated cash handling machines.

The radiation curable material preferably comprises a resin which may typically be of two types:
- a) Free radical cure resins which are unsaturated resins or monomers, prepolymers, oligomers etc. containing vinyl or acrylate unsaturation for example and which cross-link through use of a photo initiator activated by the radiation source employed e.g. UV.
- b) Cationic cure resins in which ring opening (eg epoxy types) is effected using photo initiators or catalysts which generate ionic entities under the radiation source employed e.g. UV. The ring opening is followed by intermolecular cross-linking.

The radiation used to effect curing will typically be UV radiation but could comprise electron beam, visible, or even infra-red or higher wavelength radiation, depending upon the material, its absorbance and the process used.

The support layer is preferably a polymeric film onto which the microstructure is cast and will be substantially transparent so that the optically variable effect structure can be provided on a surface of the substrate which will not be externally exposed in use, while permitting the optically variable effect to be viewed through the substrate. Flexible polymeric films suitable for the UV casting process include polyethylene teraphthalate (PET), polyethylene, polyamide, polycarbonate, poly(vinylchloride) (PVC), poly(vinylidenechloride) (PVdC), polymethylmethacrylate (PMMA), polyethylene naphthalate (PEN), and polypropylene.

The optically variable structure may comprise a hologram or diffraction grating or a non-holographic micro-optical structure or alternatively the radiation curable material will provide a liquid crystal device. The liquid crystal device will preferably be a radiation curable liquid crystal film. Prismatic structures are a preferred type of a micro-optical structure. Examples of prismatic structures suitable for the current invention include, but are not limited to, a series of parallel linear prisms with planar facets arranged to form a grooved surface, a ruled array of tetrahedra, an array of square pyramids, an array of corner-cube structures, and an array of hexagonal-faced corner-cubes. A second preferred type of micro-optical structure is one which functions as a microlens including those that refract light at a suitably curved surface of a homogenous material such as plano-convex lenslets, double convex lenslets, plano-concave lenslets, and double concave lenslets. Other suitable micro-optical structures include geometric shapes based on domes, hemispheres, hexagons, squares, cones, stepped structures, cubes, or combinations thereof.

Usually, the transparent, plastic support layer will be releasably provided on the carrier layer as an initial step since this allows very thin support layers to be used. However, it is also possibly to arrange for step i to take place after step iv. Typically, this will be when the support layer has a thickness of more than 25 microns.

Some examples of methods according to the present invention will now be described with reference to the accompanying drawings in which:-
Figure 1a illustrates a conventional transfer foil being applied to a document;
Figure 1b illustrates the transfer foil of Figure 1a following transfer;
Figures 2a-2g illustrate successive stages in the manufacture of a security device according to an embodiment of the present invention;
Figures 3a and 3b illustrate a security device manufactured in accordance with the first embodiment as it is transferred onto a security document;
Figure 4 illustrates an alternative embodiment of the security device prior to transfer onto a security document.
   and,
Figures 5a-5e illustrate the manufacturing process of a second embodiment.

Figures 2a-g illustrate a preferred process for applying a security device to a substrate such as a secure document. The security device comprises a radiation curable resin which is too thick or strong to be conventionally hot-stamped to a secure document as a patch. In this example the optically variable structure cast into the UV curable resin is a holographic structure.

In the preferred method a first substantially transparent polymeric film 10, for example PET or BOPP, is laminated to a carrier film 12 coated with a release layer 14 using a laminating adhesive 16 (Figure 2a). Alternatively a thermal release layer could be used instead of the laminating adhesive or the release layer could be omitted in favour of a corona or similar treatment of the carrier film surface. The carrier film 12 is preferably a polymeric film, for example PET or BOPP. This laminate structure is used as the substrate for the UV casting replication process.

The first stage of the UV casting process is the formation of a master structure in the form of a production tool. A negative version of the holographic structure is created in the production tool using well-known techniques such as diamond turning, holographic recording, electron beam generation, greyscale photolithography and electroforming. The production tool can typically be in the form of a sheet, a cylinder or a sleeve mounted on a cylinder.

Referring to Figure 2b, step 2 in the production process is the application of a layer 18 of UV curable resin to the exposed surface of a first polymeric film 10. The resin layer 18 must be of a sufficient thickness to form the holographic structure.

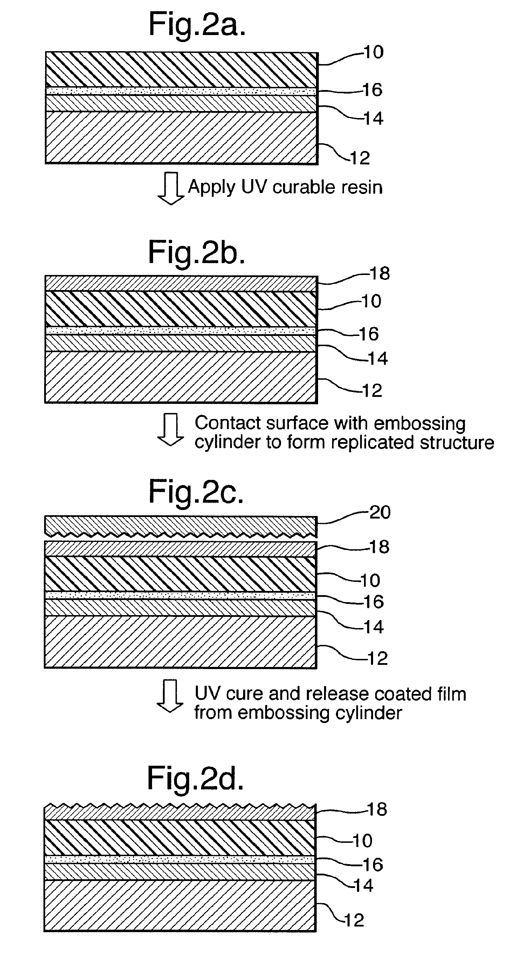

Holographic structures typically have a depth in the range 0.1-10µm. The coated resin layer 18 is then held in intimate contact with the production tool in the form of an embossing cylinder 20, whereby the holographic structure defined on the production tool is replicated in the UV curable resin layer 18 (Figure 2c). UV light is used at the point of contact to cure and harden the resin layer 18, and as a final stage, the cast film is released from the embossing cylinder (Figure 2d). Preferably the process takes place as a reel-to-reel process.

The process may further comprise providing a high reflective layer (not shown in the figure), such as a metallisation or a high refractive index material, over the microstructure. This promotes the replay of the optically variable effect but will not always be necessary particularly if subtle effects are required. If a metallisation is provided, this may be partially demetalised to achieve a patterning effect while a further protective lacquer could be applied over the optically variable effect generating structure either before or after curing.

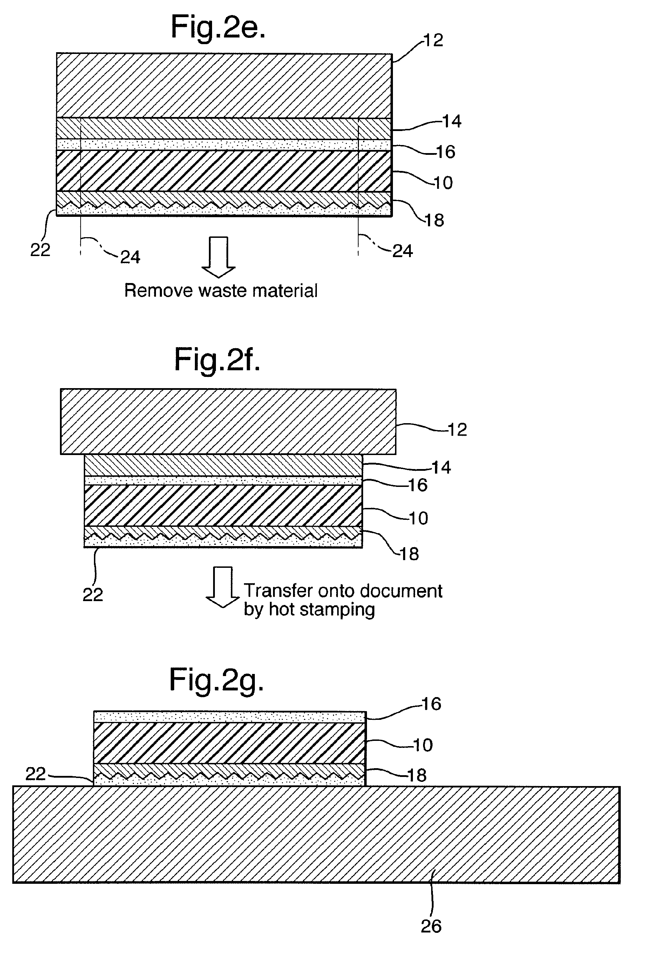

An adhesive layer 22 is then applied to at least a part of the exposed surface of the security device such that it is applied to the same side of the device as the, now cured, UV curable resin layer 18 (Figure 2e). The sample is then die-cut through (or optionally laser cut) the adhesive layer such that the cut penetrates through the structure to the release layer but not into the carrier film, as shown by the dashed lines 24 in Figure 2e. The adhesive 22, radiation cured material 18 and first polymeric film 10 outside the die-cut regions are then discarded (Figure 2f).

The device is then transferred onto a secure document 26, adhesive-side down, using a conventional hot stamping process. At the point of transfer the device is separated at the interface between the first polymeric film and the carrier film such that the layer of UV curable material containing the holographic structure and the first polymeric film within the die-cut regions is adhered to the document (Figure 2g) and the carrier film is discarded. The location of the release layer post application is not shown for clarity but dependent upon the materials selected it could be present on top of the transferred device, left on the carrier film, or partially on both.

In a second example the optically variable structure cast into the polymeric layer is a prismatic structure. For a prismatic structure a preferred method for the production tool is diamond turning. In this process a very sharp diamond tool is used to machine a negative version of the required prismatic structure in a metallic material such as copper, aluminium or nickel.

Examples of prismatic structures suitable for the current invention include but are not limited to a series of parallel linear prisms with planar facets arranged to form a grooved surface, a ruled array of tetrahedra, an array of square pyramids, an array of corner-cube structures, and an array of hexagonal-faced corner-cubes. At certain angles of view such prismatic structures exhibit a mirror-like finish due to the conditions for total internal reflection (TIR) being satisfied. In order for TIR to occur over a significantly large angular range the prismatic material must have a significantly higher refractive index than the neighbouring material typically the adhesive used to adhere it to the document. A refractive index difference of at least 0.6 between the prismatic material and the adhesive is required for a device comprising an array of linear prisms. Polymeric adhesives/coatings typically have a refractive index of no less than 1.4 and therefore in order to achieve a difference of at least 0.6 the refractive index of the prismatic material must be at least 2. Prismatic films are typically made from UV curable polymers or thermoplastic polymeric films which have refractive indices in the range 1.4-1.6. It is very difficult and expensive to increase the refractive index of a polymeric material above 1.7, and therefore this is not a practical solution. This problem can be overcome by only adhering the device to the base substrate at its perimeter leaving the central region free of adhesive such that a prism/air interface is maintained to generate total internal reflection.

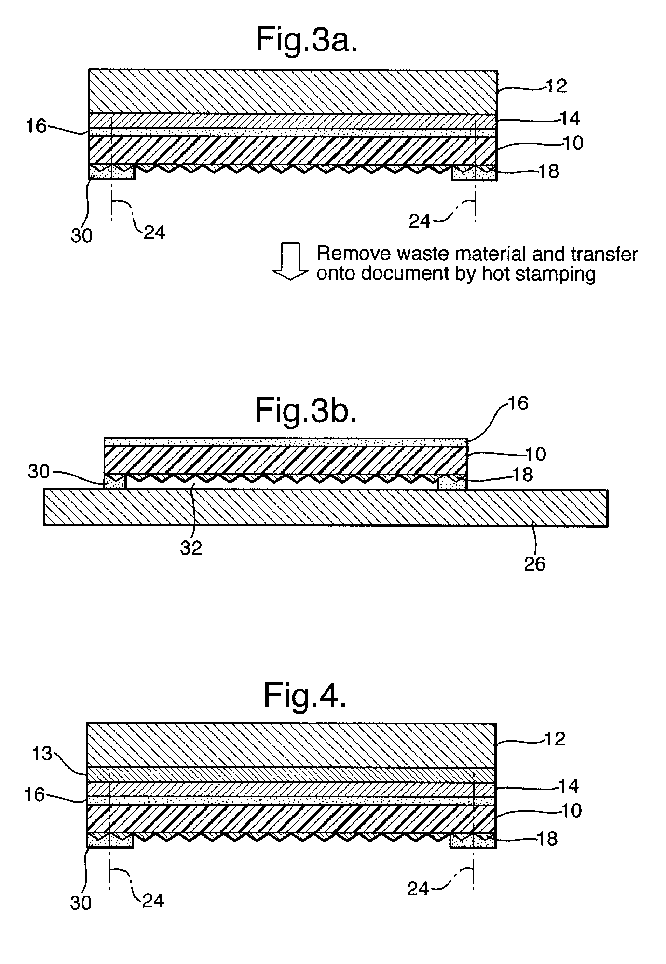

The process for generating and transferring the optical device follows the same steps as illustrated in Figures 2a-2d (similar reference numerals are used in Figure 3a and 3b to indicate similar layers) but with the holographic structure being replaced with a prismatic structure in the layer 18. An adhesive 30 is then applied to the perimeter of the security device (Figure 3a). In other examples (not shown) the adhesive could be applied to a document on to which the security device is to be transferred. In the example shown the adhesive 30 is applied onto the prismatic structure which continues up to the edge of the device. The total thickness of the adhesive layer is dependent on the height of the prismatic structure, but typically the thickness of the adhesive layer 30 measured from the top of the prismatic structure will be in the range 1-10µm. Alternatively the replication of the prismatic structure can be registered such that the perimeter of the device is free of prisms and the adhesive 30 is applied directly to the first polymeric film 10. The sample is then die-cut through the exposed adhesive layer such that the cut penetrates through to the release layer but not into the carrier film, as shown by the dashed lines 24 in Figure 3a. The adhesive 30, radiation cured material 18 and first polymeric film 10 outside the die-cut regions are then discarded.

The device is then transferred onto the document 26, adhesive-side down, using a conventional hot stamping process. At the point of transfer the device is separated at the interface between the polymeric film 10 and the carrier film 12 such that the layer of UV cured material 18 containing the prismatic structure and the first polymeric film 10 within the die-cut regions are adhered to the document 26 (Figure 3b) and the carrier film 12 is discarded. An air gap 32 is left between the majority of the prismatic structure and the document 26.

For the device structures illustrated in Figures 2e and 3a the die-cutting stage of the present invention has to be tightly controlled such that the cut penetrates through to the release layer 14 but not into the carrier film 12. If the cut penetrates into the carrier film 12 then it will be difficult to remove the waste material without tearing and damaging the carrier film. Efficient removal of the waste material is particularly important in web based continuous processes. Figure 4 illustrates an alternative embodiment of the present invention where a thin buffer layer 13 is provided between the release layer 14 and the carrier film 12. The buffer layer 13 provides a layer into which the cut can penetrate such that the tolerance of the die-cutting process can be increased without the risk of cutting into the carrier film. On removal of the waste the buffer layer 13 will separate either within the buffer layer or at the boundary with the release layer 14. The buffer layer 13 may take the form of a tie-coat polymeric coating or a thin polymeric film. The thickness of the buffer layer 13 is preferably in the range 1-20µm and even more preferably in the range 2-12µm.

Typically a UV casting replication process for micro-optical structures with a depth greater than 10µm requires a minimum film thickness of 25µm for the film onto which the structure is cast to enable efficient handling. A thickness of 25µm for the first polymeric film 10 results in a final device thickness for the current invention of approximately 40µm once the prism height (e.g. 10µm) and the adhesive 30 thickness (e.g. 5µm) is added on. A 40µm thick surface patch is suitable for certain secure documents such as passports and ID cards, but is not ideally suitable for documents which have to be sorted and distributed using automated cash handling equipment, such as banknotes. One advantage of the current invention is that the sacrificial carrier film 12 supports the first polymeric film 10 during the replication of the prism structures, thus enabling a thin polymeric film to be used as the base substrate for the prismatic film. The thin polymeric film is preferably less than 10µm thick and even more preferably less than 5µm thick, reducing the thickness of the final security device to 20-25µm and improving the efficiency of the final document through the automated cash handling machines.

In a further step to improve the handling efficiency of the document the thickness of the device around its perimeter can be graduated such that it is lower at the edge of the security device thus introducing a more gradual change in thickness between the base document and the security device. This gradual change in thickness at the perimeter of the device can be achieved by reducing the prism height of the prismatic structure or the thickness of the adhesive layer.

In the embodiments described in Figures 2 and 3 the UV casting process takes place after the lamination of the first polymeric film 10 with the carrier film 12. It is therefore essential that the strength of the lamination is sufficient to withstand the cast cure process, i.e. the carrier film 12 must not separate from the first polymeric film 10 during the UV casting process. As a general guide the bond between the polymeric film 10 and the carrier film 12 must have a greater strength than the peel force experienced on the laminate as it is being separated from the master structure. The strength of this peel force will be dependent on the properties of the UV curable material, the material used for the master structure and the coarseness of the optically variable structure. If a release layer 14 is used between the first polymeric film 10 and the carrier film 12 then it should be selected such that it does not release during the UV casting process but does release during the hot stamping process.

In an alternative embodiment the lamination between the first polymeric film 10 and the carrier film 12 can take place after the UV casting process. This is appropriate if the thickness of the first polymeric film 10 onto which the optically variable microstructure is cast does not have to be <25µm, for example if the end-use application is for identity cards.

In a further alternative embodiment a laminate structure can be generated which is known to be of sufficient strength to withstand the UV casting process. Once the UV casting has taken place the carrier film can be discarded and replaced with a second carrier film, which has a release layer suitable for the hot transfer process. The device is then die-cut and transferred to the document as described with reference to Figures 2 and 3.

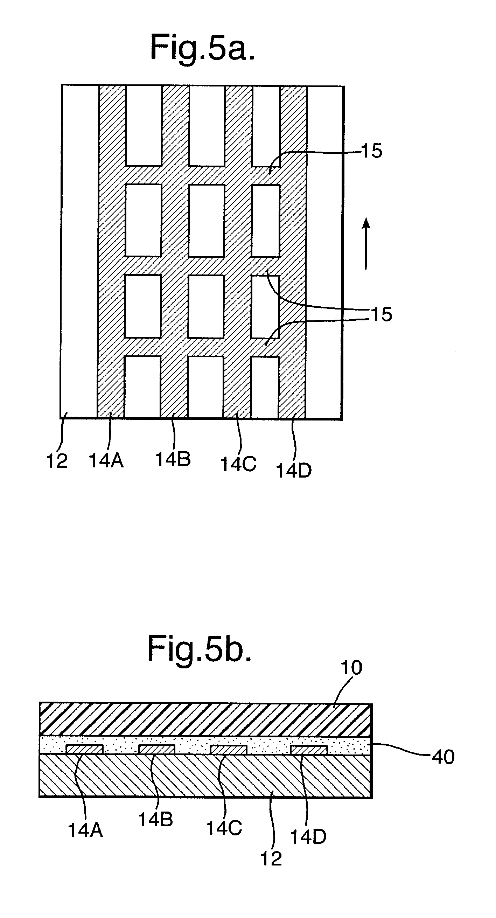

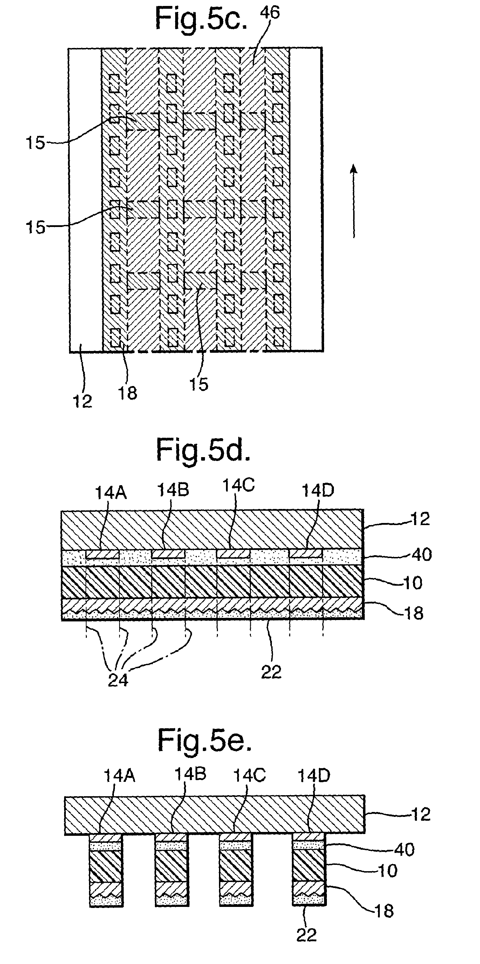

Figure 5 illustrates an additional embodiment of the current invention. In this embodiment a carrier film 12, for example a polymeric film, is partially coated with a release layer 14, for example in the form of strips 14A-14D in the machine direction of a polymer web (Figure 5a). Joining elements 15 comprising of release layer material are also provided between the strips 14A-14D to enable the waste material to be discarded continuously during the subsequent die-cutting process. In this example a release layer is selected such that it will release during the hot stamping process but unfortunately due to its low peel strength it will also release during the UV casting process. The carrier film 12 is then laminated to a first polymeric film 10, for example PET or BOPP, using a laminating adhesive 40 (Figure 5b). The laminating adhesive 40 is of a sufficient strength to withstand the peel force experienced on the laminate structure during the UV casting process. The laminate structure remains intact during UV casting due to the localised regions of high strength present in the regions without the release layer. This laminate structure is used as the substrate for the UV casting replication process.

A UV curable resin 18 is then applied, preferably in register, such that it is positioned over the localised release layer strips 14A-14D. The coated film 18 is then held in intimate contact with a production tool in the form of an embossing cylinder (not shown), whereby the optically variable structure defined on the production tool is replicated in the UV curable resin. UV light is used at the point of contact to cure and harden the resin, and as a final stage, the cast film is released from the embossing cylinder. Preferably the optically variable structure is replicated in register with the release layer. Preferably the process takes place as a reel-to-reel process. Figure 5c is a view of the top surface of the laminate construction illustrating the strips 14A-14D of the UV curable resin into which the optically variable structure is replicated.

An adhesive layer 22 is then applied to at least a part of the exposed surface of the web that will ultimately be transferred to the document. The web is then die-cut such that the die-cutting defines the regions 44 to be transferred to the document in the form of individual patches along the length of each strip (Figure 5c). In this process the web is die-cut through the adhesive layer 22 such that the cut 24 penetrate through to the release layer strips 14A-14D but not into the carrier film 12, as shown by the dashed lines in Figure 5d. It should be noted that Figure 5d shows the position of the die-cutting in perfect register with the release layer pattern, however in practice it is preferable for the die cutting to take place within the release layer region to allow for manufacturing tolerances. The adhesive 22, radiation cured material 18 and first polymeric film 10 outside the die-cut regions are then discarded (Figure 5e). In order to enable the waste material to be discarded continuously the regions 46 between the strips 14A-14D where the release layer is not present, marked by horizontal shading on Figure 5c, must also be die-cut.

The web is then slit along the edges of the strips 14A-14D in Figure 5c to produce narrow webs of material comprising of individual strips containing a series of patches to be transferred to a base substrate. The device is then transferred onto the document, adhesive-side down, using a conventional hot stamping process. At the point of transfer the device is separated at the interface between the polymeric film and the carrier film such that for each patch the layer of UV curable material containing the optically variable structure and the first polymeric film are adhered to the document and the carrier film is discarded.

In a further embodiment the security device can be applied onto the surface of a secure document such that it at least partly extends over an aperture or hole extending partially or completely through the security document.

## Claims

1. A method of manufacturing a security device, the method comprising
i) providing a transparent, plastics support layer releasably on a carrier layer;
ii) coating the plastics support layer with a radiation curable material, wherein either
a) the radiation curable material inherently provides an optically variable effect or
b) the method further comprises providing the radiation curable material with an optically variable effect generating structure,
iii) curing the radiation curable material by exposure to suitable curing radiation; and,
iv) cutting through the cured material and the support layer along a boundary defining the security device.

2. A method according to claim 1, further comprising, between steps iii and iv, a step v of providing an adhesive, for example a pressure or heat sensitive adhesive, on the cured material, step v including cutting through the adhesive.

3. A method according to claim 2, wherein the adhesive is provided adjacent to the boundary of the security device and/or in a pattern or selectively within the boundary.

4. A method according to any of the preceding claims, further comprising after step iv, or step v if carried out, removing parts of the cured material, support layer and adhesive located outside the security device boundary.

5. A method according to any of the preceding claims, wherein step v comprises die cutting or laser cutting.

6. A method according to any of the preceding claims, wherein step i takes place after step iii.

7. A method according to claim 6, wherein the support layer has a thickness of more than 25 microns.

8. A method according to any of claims 1 to 5, wherein step i takes place before step ii, the support layer having a thickness of no more than 25 microns.

9. A method according to claim 8, wherein the support layer has a thickness less than 10 microns, preferably less than 5 microns.

10. A method according to any of the preceding claims, wherein step i comprises laminating the support layer to the carrier layer.

11. A method according to claim 10, wherein the support layer is laminated to the carrier layer with a release layer therebetween.

12. A method according to claim 11, wherein the release layer is applied in separate strips, a laminating adhesive also being provided to join the support layer to the carrier layer.

13. A method according to claim 12, wherein the security device boundary is defined within the area of a single strip of the release layer.

14. A method according to any of claims 10 to 13, further comprising providing a buffer layer between the release layer and the carrier layer.

15. A method according to claim 14, wherein the thickness of the buffer layer is in the range 1-20µm, preferably in the range 2-12µm.

16. A method according to any of the preceding claims, further comprising, following step iii, removing the carrier layer and securing a new carrier layer suitable for use with a hot transfer process, to the plastics support layer via a release layer.

17. A method according to any of the preceding claims, wherein step (b) comprises imparting a surface relief structure defining the optically variable effect to the radiation curable material by impressing the material against a complementary shaped die.

18. A method according to any of the preceding claims, wherein the thickness of the security device reduces towards its boundary.

19. A method according to claim 18, wherein the thickness of one or both of the radiation curable material and the adhesive, when provided, reduces towards the boundary of the security device.

20. A method according to any of the preceding claims, wherein the optically variable effect generating structure comprises one of a hologram, diffraction grating, and non-holographic micro-optical structure such as a prismatic structure or a microlens structure.

21. A method according to any of the preceding claims, wherein the radiation curable material is a resin.

22. A method according to claim 21, wherein the resin is one of a free radical cure resin and a cationic cure resin.

23. A method according to any of the preceding claims, wherein the radiation is one of electron beam, visible or infrared radiation.

24. A method according to claim 22, wherein the radiation is UV radiation.

25. A method according to any of the preceding claims, wherein the radiation curable material is selected from one of
a) Free radical cure resins, and
b) Cationic cure resins.

26. A method according to any of the preceding claims, further comprising transferring the security device to a security document.

27. A method according to claim 26, when dependent on at least claim 2, wherein the security device is adhered to the security document using the adhesive provided on the cured material.

28. A method according to claim 26 or claim 27, wherein the security device is transferred using a hot stamping process.

29. A method according to any of claims 26 to 28, wherein the security device is applied such that it extends at least partly over an aperture formed in the security document.

30. A method according to claim 29, wherein the aperture extends completely through the security document.

31. A method according to any of claims 26 to 30, wherein the security document comprises a document of value such as an identity card, credit card, banknote or the like.

32. A security document carrying a security device manufactured according to any of claims 1 to 25.
